Europäisches Patentamt

European Patent Office

Office européen des brevets

(19)

(11) Numéro de publication: **0 265 308**
**A1**

## DEMANDE DE BREVET EUROPEEN

(12)

(21) Numéro de dépôt: 87402099.3

(22) Date de dépôt: 21.09.87

(51) Int. Cl.4: **C 13 G 1/04**
C 13 F 1/02

(30) Priorité: 14.10.86 FR 8614221

(43) Date de publication de la demande:
27.04.88 **Bulletin 88/17**

(84) Etats contractants désignés:
AT BE CH DE ES GB GR IT LI LU NL SE

(71) Demandeur: **FIVES-CAIL BABCOCK, Société anonyme**
**7 rue Montalivet**
**F-75383 Paris Cédex 08 (FR)**

(72) Inventeur: **Journet, Gérard**
**9, rue de l'Houssoye**
**F-59310 Coutiches (FR)**

(74) Mandataire: **Fontanié, Etienne**
**FIVES-CAIL BABCOCK 80, rue Emile Zola B.P. 95**
**F-93123 La Courneuve Cédex (FR)**

(54) **Perfectionnement aux installations de cristallisation à marche continue pour la production de sucre.**

(57) Installation de cristallisation à marche continue pour la production de sucre comportant un appareil de cristallisation à marche continue (10) divisé en plusieurs compartiments et un malaxeur (26) où la masse-cuite produite par l'appareil de cristallisation est brassée et refroidie pendant son déplacement, d'une extrémité à l'autre du malaxeur.

Pour permettre redémarrage rapide de l'appareil de cristallisation après un arrêt pour nettoyage, le malaxeur (26) comporte au moins un panneau mobile (32) permettant de diviser l'intérieur du malaxeur en plusieurs compartiments (26', 26″) isolés l'un de l'autre, et des moyens (34) sont prévus pour relier chaque compartiment du malaxeur à un compartiment ou un groupe de compartiments de l'appareil de cristallisation (10).

Fig. 2

**Description**

## PERFECTIONNEMENT AUX INSTALLATIONS DE CRISTALLISATION A MARCHE CONTINUE POUR LA PRODUCTION DE SUCRE.

La présente invention concerne les installations de cristallisation à marche continue utilisées pour la production de sucre et comprenant un appareil de cristallisation à marche continue produisant, à partir de sirop et de germes de cristallisation, une masse-cuite qui est traitée, à la sortie de cet appareil, dans un malaxeur où elle est refroidie pour provoquer un grossissement supplémentaire des cristaux de sucre.

L'appareil de cristallisation est constitué par une cuve horizontale, fermée et divisée par des cloisons verticales en compartiments qui communiquent entre eux par des ouvertures ménagées dans les cloisons et sont traversés l'un après l'autre par la masse en cours de cristallisation. Un faisceau de chauffage placé dans la partie inférieure de la cuve permet de chauffer la masse en cours de cristallisation dans chaque compartiment et d'en évaporer une partie pour maintenir la liqueur-mère en état de sursaturation. Tous les compartiments sont alimentés en sirop sous-saturé, le premier compartiment recevant en outre un magma d'ensemencement et la masse-cuite étant extraite du dernier compartiment.

Dans les installations connues, le magma d'ensemencement est produit dans un appareil de cristallisation à marche discontinue de capacité relativement importante, et pour démarrer l'installation on commence par produire une quantité suffisante de magma, puis on remplit de magma la partie inférieure de l'appareil de cristallisation jusqu'à ce que le faisceau de chauffage soit entièrement recouvert et on met en route cet appareil en alimentant en vapeur le faisceau de chauffage et en introduisant dans les différents compartiments des débits réglés de sirop. Pour redémarrer l'installation après nettoyage des appareils, on opère de la même façon en ayant soin de programmer la production de magma pour disposer de la quantité nécessaire au moment du redémarrage.

Actuellement, pour augmenter la rentabilité de ces installations en diminuant la consommation thermique et en économisant la main d'oeuvre, on s'oriente vers une production en continue du magma et une réduction de la proportion de magma utilisé. Dans ce cas, comme on ne dispose plus d'appareil discontinu pour démarrer l'installation, on doit produire un pied de cuite dans l'appareil de cristallisation, comme on le fait dans une chaudière à cuire discontinue, c'est-à-dire qu'on le remplit de sirop pour recouvrir le faisceau de chauffage, on concentre ce sirop, on l'ensemence avec des germes de cristallisation, puis on provoque le grossissement des germes en réglant l'addition de sirop. Ce n'est que lorsque les cristaux ont atteint la grosseur voulue que l'on peut faire fonctionner l'appareil de cristallisation en marche continue. Cette opération de démarrage est longue et difficile à contrôler car l'appareil de cristallisation n'est pas conçu travailler dans ces conditions. Cette procédure peut être utilisée en début de campagne, mais il ne serait pas rentable de l'utiliser après chaque arrêt pour nettoyage de l'appareil de cristallisation, en cours de campagne.

Le but de la présente invention est d'apporter aux installations concernées des perfectionnements permettant de redémarrer très rapidement l'appareil de cristallisation après un arrêt pour nettoyage.

L'installation objet de la présente invention est caractérisée en ce que le malaxeur comporte des cloisons équipées de panneaux mobiles permettant de le diviser en plusieurs compartiments isolés les uns des autres et en ce que des moyens sont prévus pour relier chaque compartiment du malaxeur à un compartiment ou un groupe de compartiments de l'appareil de cristallisation.

Grâce à ce perfectionnement, on peut stocker séparément dans les différents compartiments du malaxeur, les produits (suspension de cristaux dans une liqueur-mère) de différentes qualités se trouvant dans les compartiments ou groupe de compartiments de l'appareil de cristallisation au moment de l'arrêt. Après nettoyage, on renvoie ces produits dans les compartiments ou groupe de compartiments d'où ils proviennent et on reconstitue ainsi le contenu de l'appareil de cristallisation avant l'arrêt, ce qui permet un redémarrage rapide de l'installation dès réchauffage de la masse-cuite à sa témperature de marche en régime établi.

Par précaution on effectuera une légère dilution, à l'aide d'un sirop sous-saturé, de la masse-cuite contenu dans chacun des compartiments du malaxeur, afin de contrarier l'élévation de compacité prévisible durant l'opération de nettoyage du fait du refroidissement et de la cristallisation.

De préférence, les compartiments de l'appareil de cristallisation et ceux du malaxeur seront reliés en permanence par des tuyauteries munies de vannes permettant d'établir des communications entre les compartiments respectifs ou de les isoler. Pour transférer les produits de l'appareil de cristallisation au malaxeur et vice-versa on pourra utiliser des pompes. Une solution plus économique consiste à utiliser la différence des pressions dans l'appareil de cristallisation et dans le malaxeur pour assurer ce transfert. En particulier, si le malaxeur peut être mis sous vide, on vidangera le contenu de l'appareil de cristallisation dans le malaxeur en reliant ce dernier à la source de vice et en cassant le vide dans l'appareil de cristallisation et on effectuera les opérations inverses pour vidanger le malaxeur dans l'appareil de cristallisation. Dans le cas où le malaxeur est ouvert, on pourra vidanger le contenu de l'appareil de cristallisation dans le malaxeur en mettant l'appareil de cristallisation sous-pression, l'opération inverse étant effectuée en mettant cet appareil sous-vide. Pour permettre la vidange de l'appareil de cristallisation au moyen d'une pression relativement faible, le malaxeur sera de préférence placé à un niveau inférieur à celui de l'appareil de cristallisation, ce niveau étant choisi pour que le malaxeur puisse être vidangé par aspiration, compte-tenu du vide disponible.

Le nombre de compartiments du malaxeur sera au plus égal à celui des compartiments de l'appareil de cristallisation à marche continue et au moins égal à deux.

Au lieu d'un malaxeur compartimenté, on pourra utiliser une série de malaxeurs normalement reliés entre eux par des tuyauteries et des pompes ou disposés en cascade, chaque malaxeur débordant dans le malaxeur suivant, et pouvant être isolés les uns des autres et reliés individuellement à un compartiment ou groupe de compartiments de l'appareil de cristallisation à marche continue.

La description qui suit se réfère au dessin l'accompagnant qui montre, à titre d'exemple non limitatif, un mode de réalisation de l'invention et sur lequel :

La figure 1 est une représentation schématique d'un appareil de cristallisation à marche continue et d'un malaxeur associé, vus en coupe longitudinale, et

La figure 2 est une coupe transversale des appareils de la figure 1.

L'appareil de cristallisation à marche continue 10 est constitué par une cuve cylindrique, à section circulaire ou autre, disposée horizontalement. Cette cuve est fermée et peut être reliée à une source de vide. L'intérieur de la cuve est divisée par des cloisons verticales transversales 12 et par une cloison verticale longitudinale 14 en plusieurs compartiments (12 dans l'appareil représenté). Ces cloisons n'atteignent pas le sommet de la cuve, de sorte que tous les compartiments communiquent avec l'espace supérieur de la cuve mis sous vide, Par ailleurs, les compartiments voisins communiquent entre eux par des ouvertures ménagées dans les cloisons de façon à imposer à la masse en cours de cristallisation un trajet systématique. Un faisceau de chauffage 16 formé, par exemple, de tubes horizontaux parallèles est disposé dans la partie inférieure de la cuve, à l'écart de ses parois. Ce faisceau est alimenté en vapeur par une tuyauterie 18 et permet de chauffer tous les compartiments. Chaque compartiment est alimenté en sirop par des moyens non représentés. Un magma d'ensemencement est introduit en 22 dans le premier compartiment, et la masse-cuite produite est extraite du dernier compartiment au moyen d'une pompe 24 qui alimente le malaxeur 26.

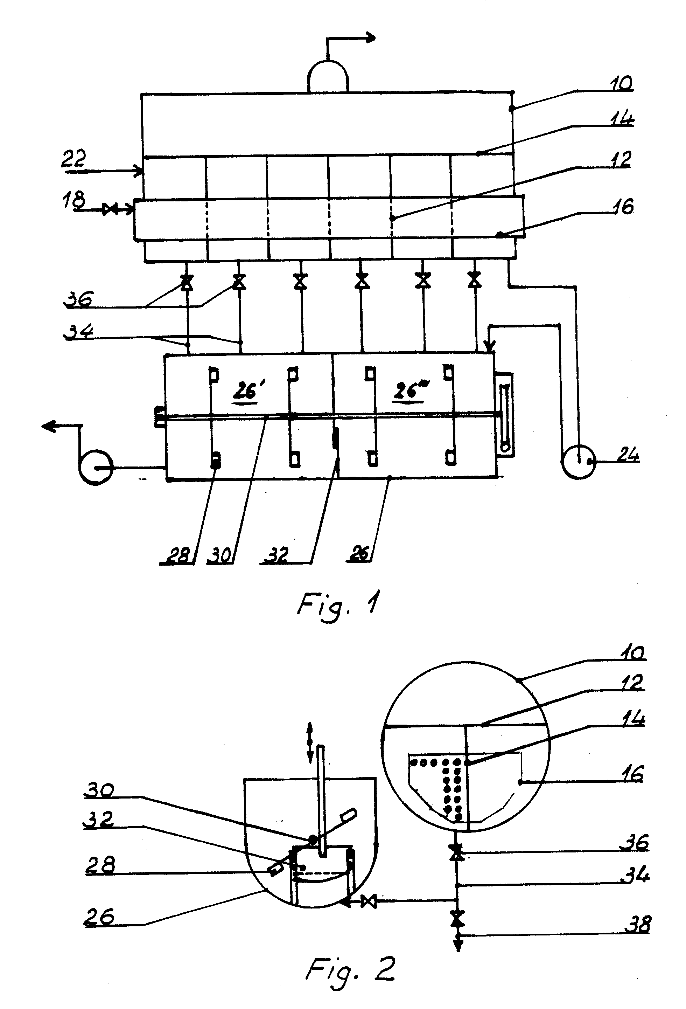

Le malaxeur 26 est constitué par une cuve horizontale ouverte équipée d'organes de brassage et de refroidissement qui ont été schématisés par des pales 28 fixées sur un arbre rotatif horizontal 30. Environ à mi-longueur, le malaxeur est muni d'une cloison transversale équipée d'un panneau mobile 32 qui peut être abaissé (figure 1) pour fermer une ouverture ménagée dans la cloison et diviser le malaxeur en deux compartiment 26', 26" ou relevé (figure 2) pour permettre la libre circulation de la masse-cuite d'une extrémité à l'autre du malaxeur.

Les six premiers compartiments de l'appareil 10 sont reliés au compartiment 26' du malaxeur par des tuyauteries 34 munies de vannes 36 ; les six autres compartiments de l'appareil 10 sont reliés de la même façon au compartiment 26" du malaxeur.

En cours de production, la masse-cuite extraite, par la pompe 24, du dernier compartiment de l'appareil 10 est envoyée dans le malaxeur 26 où elle est brassée et refroidie par les organes 28 pendant son déplacement d'une extrémité à l'autre du malaxeur, le panneau 32 étant alors relevé. Lorsqu'il faut nettoyer l'appareil 10, on coupe l'alimentation en sirop, en magma d'ensemencement et en vapeur de chauffage, on abaisse le panneau 32 du malaxeur, on ouvre les vannes 36 et on casse le vide dans l'appareil 10. Une partie du produit contenu dans l'appareil 10, qui est constitué par des cristaux de sucre en suspension dans une liqueur-mère, s'écoule par gravité dans le malaxeur 26 qui est placé plus bas que l'appareil 10. Pour compléter la vidange, on met alors l'appareil 10 sous pression, par exemple au moyen de vapeur, pour refouler le produit restant dans le malaxeur. Quand la vidange est terminée, on ferme les vannes 36 et on lave l'appareil 10. Les produits du lavage sont évacués par des dérivations 38 prévues sur les tuyauteries 34. Après lavage, les vannes 36 sont ouvertes et l'appareil 10 est mis sous vide. Le produit se trouvant dans le compartiment 26' est alors aspiré dans les six premiers compartiments de l'appareil 10 et le produit se trouvant dans le compartiment 26" est aspiré dans les six derniers compartiments de cet appareil. Quand le malaxeur est vidé, on ferme les vannes 36 et on alimente le faisceau de chauffage en vapeur pour réchauffer la masse-cuite à sa température normale ; on peut alors remettre en marche l'appareil 10 en ouvrant les alimentations en sirop et en magma. Par précaution, on pourra effectuer une légère dilution, à l'aide d'un sirop sous-saturé, de la masse-cuite contenue dans chaque compartiment du malaxeur afin de contrarier l'élévation de compacité due au refroidissement et à la cristallisation pendant le nettoyage.

En stockant séparément, dans les compartiments 26' et 26" du malaxeur, pendant la durée de l'opération de nettoyage, les produits contenus dans les six premiers compartiments et ceux contenus dans les six derniers compartiments de l'appareil 10, on évite de mélanger les cristaux de très petites dimensions contenus dans les premiers compartiments aux cristaux beaucoup plus gros se trouvant dans les derniers compartiments, ce qui provoquerait la production d'une masse cuite de mauvaise qualité pendant un certain temps après le redémarrage de l'appareil 10. On pourrait évidemment améliorer encore la qualité de la masse-cuite produite immédiatement après le démarrage en augmentant le nombre de compartiments du malaxeur, la solution idéale étant d'avoir dans le malaxeur autant de compartiments que dans l'appareil de cristallisation 10. En pratique, on réalisera un compromis entre les impératifs de qualité et les impératifs économiques, le cloisonnage du malaxeur augmentant sa complexité et, par conséquent, son coût.

Il est bien entendu que toutes les modifications qui pourraient être apportées au mode de réalisation décrit par l'emploi de moyens techniques équivalents entrent dans le cadre de l'invention.

## Revendications

1. Installation de cristallisation à marche continue pour la production de sucre comportant un appareil de cristallisation à marche continue (10) divisé en plusieurs compartiments et un malaxeur (26) où la masse-cuite produite par l'appareil de cristallisation est brassée et refroidie pendant son déplacement, d'une extrémité à l'autre du malaxeur, caractérisée en ce que ledit malaxeur (26) comporte au moins un panneau mobile (32) permettant de diviser l'intérieur du malaxeur en plusieurs compartiments (26', 26") isolés l'un de l'autre, et en ce que des moyens (34) sont prévus pour relier chaque compartiment du malaxeur à un compartiment ou un groupe de compartiments de l'appareil de cristallisation (10).

2. Installation selon la revendication 1, caractérisée en ce que chaque compartiment de l'appareil de cristallisation (10) est relié par une tuyauterie (34) munie d'une vanne (36) à un compartiment (26', 26") du malaxeur (26).

3. Installation selon la revendication 2, caractérisé en ce que des moyens sont prévus pour créer une différence de pressions entre l'appareil de cristallisation (10) et le malaxeur (26) pour refouler le contenu de l'appareil de cristallisation dans le malaxeur et vice-versa, après ouverture desdites vannes (36).

4. Installation selon la revendication 2 ou 3, caractérisée en ce que ledit malaxeur (26) est ouvert et placé à un niveau inférieur à celui de l'appareil de cristallisation (10), ce niveau étant choisi pour que le contenu de l'appareil de cristallisation puisse être refoulé dans le malaxeur en raccordant ledit appareil à une source de gaz ou de vapeur sous-pression disponible et aspiré du malaxeur dans l'appareil de cristallisation en reliant ce dernier à une source de vide disponible.

5. Installation selon la revendication 2 ou 3, caractérisée en ce que ledit malaxeur (26) est fermé et peut être relié à une source de vide disponible pour aspirer le contenu de l'appareil de cristallisation (10) alors que ce dernier est mis à la pression atmosphérique.

6. Installation selon l'une quelconque des revendications précédentes, caractérisée en ce que le malaxeur compartimenté (26) est remplacé par plusieurs malaxeurs indépendants normalement reliés en série et pouvant être isolés les uns des autres et reliés chacun à un compartiment ou groupe de compartiments de l'appareil de cristallisation (10).

7. Installation selon l'une quelconque des revendications précédentes, caractérisée en ce que des moyens sont prévus pour assurer une légère dilution du contenu de chaque compartiment du malaxeur ou de chaque malaxeur.

0265308

Fig. 1

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 197 067  (HYESON)<br>* Revendications 1-3,7; figure 1 *<br>--- | 1 | C 13 G    1/04<br>C 13 F    1/02 |
| A | FR-A-  898 449  (BABCOCK & WILCOX)<br>* Résumé; figures 1,4 *<br>--- | 1,6 | |
| A | GB-A-   9 148  (GRIERE) (A.D. 1909)<br>* Revendication 1; figure 5 *<br>--- | 1 | |
| A | FR-A-1 324 801  (SÜDDEUTSCHE ZUCKER)<br>* Résumé; figures 1,7a *<br>----- | 1-7 | |

DOMAINES TECHNIQUES
RECHERCHES (Int. Cl.4)

C 13 G
C 13 F

Le présent rapport a été établi pour toutes les revendications

| Lieu de la recherche | Date d'achèvement de la recherche | Examinateur |
|---|---|---|
| LA HAYE | 04-01-1988 | 4141 |